# EUROPÄISCHE PATENTSCHRIFT

(11) **EP 2 960 497 B1**
(45) Veröffentlichungstag und Bekanntmachung des Hinweises auf die Patenterteilung: **28.12.2016**
(21) Anmeldenummer: 15170082.0
(22) Anmeldetag: 01.06.2015
(51) Int. Cl.: F03G 7/06

(54) **THERMISCHES STELLELEMENT AUS EINER FORMGEDÄCHTNISLEGIERUNG**
THERMAL ACTUATOR MADE FROM A SHAPE MEMORY ALLOY
ÉLÉMENT DE RÉGLAGE THERMIQUE EN ALLIAGE À MÉMOIRE DE FORME

(30) Priorität: 04.06.2014 DE 102014107821
(43) Veröffentlichungstag der Anmeldung: 30.12.2015
(73) Patentinhaber: G. Rau GmbH. & Co.KG, 75172 Pforzheim (DE)
(72) Erfinder: NUSSKERN, Hans, 75181 Pforzheim (DE)
(74) Vertreter: Jany, Peter

(56) Entgegenhaltungen:
- EP-A1- 2 160 086
- EP-A2- 1 243 793
- WO-A1-02/067283

## Beschreibung

Die Erfindung betrifft ein thermisches Stellelement, das aus einer Ausgangsstellung bei einer Temperaturänderung, die zum Überschreiten oder Unterschreiten einer Schalttemperatur führt, beim Erreichen der Schalttemperatur eine Verbiegung oder elastische Auslenkung in eine aktivierte Stellung durchführt, wobei die Verbiegung oder Auslenkung eine Stellkraft erzeugt, die als thermosensitive Aktorik nutzbar ist, und bei einem Rückgang der Temperaturänderung, die zum Unterschreiten bzw. Überschreiten der Schalttemperatur führt, aus der aktivierten Stellung in die Ausgangsstellung zurückkehrt, mit einer geschichteten Anordnung zu einem Paket verbundener streifenförmiger Schichten, wobei mindestens eine der Schichten eine stellkrafterzeugende Schicht ist, die bei der Temperaturänderung die Stellkraft des Stellelements erzeugt, und die stellkrafterzeugende Schicht aus einer Formgedächtnislegierung gebildet ist.

Ein solches Stellelement ist ein thermosensitiver Aktor, der auch als Biegeelement bezeichnet wird. Es handelt sich dabei um ein thermisch aktives Bauteil, das thermische Energie in mechanische Energie umwandelt, wobei derartige Bauteile zumeist Temperaturfühler und Stellelement in einem sind. Die erzeugte mechanische Energie wird zum Ausführen von temperaturabhängigen Stellvorgängen ausgenutzt. Im Einsatzfall entwickeln Stellelemente Kräfte und führen gleichzeitig Bewegungen aus, das heißt sie verrichten Arbeit im physikalischen Sinne.

Thermische Stellelemente aus einer Formgedächtnislegierung sind in der Geräte-, Hausgeräte- und Installationstechnik bekannt. Sie werden beispielsweise zum Öffnen von Ventilatorklappen, Sichern von Toastern, temperaturabhängigen Verriegeln oder Öffnen von Teilen, als Temperaturregler und zum Realisieren eines Überhitzungsschutzes genutzt. Beispielweise entsteht in technischen Prozessen oft ungewollt Wärme, u.a. durch Reibungseffekte, thermische Verluste oder durch Bearbeitungsprozesse. Insbesondere bei zeitlich oder örtlich inhomogenen Wärmequellen entstehen dadurch veränderliche Prozessbedingungen, die einen ungünstigen Einfluss auf die Qualität des Prozesses oder auf den Verschleiß beteiligter Komponenten haben. Durch den Einsatz thermischer Formgedächtnislegierungen als thermosensitive Aktorik steht ein Werkzeug zur Verfügung, um gezielt auf diese thermisch induzierten Variationen technischer Prozesse zu reagieren. Damit ist es möglich, zum Beispiel thermische Deformationen zu kompensieren oder Wärmeströme gezielt zu steuern. Wenn ausschließlich die Prozesswärme für die Aktorik genutzt wird, kann ein völlig autarkes Aktorsystem gebildet werden.

Zu den konventionellen, das heißt nicht aus einer Formgedächtnislegierung bestehenden thermischen Stellelementen gehören Thermobimetalle, Thermobimetallschnappelemente und Dehnstoffelemente.

Thermobimetalle, die auch Bimetalle genannt werden, sind Schichtverbundwerkstoffe, die aus mindestens zwei Komponenten mit unterschiedlichem Ausdehnungskoeffizienten bestehen. Da sich bei Erwärmung die eine Komponente stärker ausdehnt als die andere, entsteht eine temperaturabhähgige Krümmung des Thermobimetalles. Ein Thermobimetall ist ein Metallstreifen aus zwei Schichten unterschiedlicher Metalle, die miteinander stoffschlüssig oder formschlüssig verbunden sind. Charakteristisch ist die Veränderung der Form bei Temperaturänderung. Diese äußert sich als Verbiegung. Ursache ist der unterschiedliche Wärmeausdehnungskoeffizient der verwendeten Metalle. Diese Metalle können zum Beispiel Zink und Stahl sein oder auch Stahl in Kombination mit der Legierung Messing. Thermobimetalle werden üblicherweise in Blech- oder Bandform hergestellt. Die blanken, von Oxidschichten freien Metallbleche werden dabei unter Druck aufeinander gewalzt. In der Kontaktzone entsteht durch Kaltverschweißung und einer anschließenden Diffusionsglühbehandlung eine unlösbare Verbindung. Bei einer anderen Ausführung werden die Metallenden deckungsgleich mit Durchgangsbohrungen versehen und miteinander vernietet oder auch verschraubt. Thermobimetalle werden zu Steuerungszwecken, wie zur temperaturabhängigen automatischen Betätigung von Ventilen, Schaltvorgängen und teilweise auch in Messinstrumenten verwendet.

Teile aus Thermobimetall zeigen beim Erwärmen und Abkühlen im Allgemeinen eine stetige Gestaltsänderung. Durch entsprechende mechanische Vorwölbung kann unter Einhaltung bestimmter Grenzbedingungen ein Schnappeffekt erreicht werden. Ein Beispiel für ein Thermobimetallschnappelement ist eine kalottenförmig gewölbte kreisrunde Scheibe, die sich bei einer Temperaturerhöhung zunächst stetig wölbt und dann beim Erreichen einer Schnapppunkttemperatur einen instabilen Spannungszustand einnimmt und in eine entgegengesetzt gewölbte Form umspringt.

Dehnstoffelemente besitzen einen formsteifen, druckfesten Behälter, in dem sich eine Dehnstofffüllung befindet. Bei Temperaturerhöhung schmilzt dieser Dehnstoff. Die beim Schmelzvorgang auftretende erhebliche Volumenzunahme wird über einen Kolben zur Arbeitsleistung genutzt. Beim Abkühlen erfolgt die Rückbewegung mit Hilfe einer äußeren Rückstellfeder.

Thermische Stellelemente mit einer geschichteten Anordnung zu einem Paket verbundener streifenförmiger Schichten, von denen mindestens eine aus einer Formgedächtnislegierung gebildet ist, weisen auf den ersten Blick in ihrem Aufbau eine gewisse Ähnlichkeit zu einem Thermobimetall auf, unterscheiden sich aber typischerweise von Thermobimetallen in folgender Hinsicht.

Bei einem Formgedächtnislegierung-Stellelement sind die Schichten kraft- und/oder formschlüssig miteinander verbunden, bei einem Thermobimetall sind die Schichten des Schichtverbundwerkstoffs miteinander stoffschlüssig oder formschlüssig verbunden. Bei einem Formgedächtnislegierung-Stellelement ist die Ursache, die bei einer Temperaturänderung bei Erreichen der Schalttemperatur zu seiner Verformung und damit zur Erzeugung der Stellkraft führt, eine Formänderung der Formgedächtnislegierung aufgrund einer thermoelastischen Umwandlung bei Temperaturänderung, bei einem Thermobimetall ist die Ursache die unterschiedliche Wärmeausdehnung der verwendeten Metalle. Formgedächtnislegierung-Stellelemente haben eine sprungartige Temperatur-Weg-Abhängigkeit, ein Thermobimetall eine lineare. Formgedächtnislegierung-Stellelemente können im Vergleich zu Thermobimetallen eine wesentlich größere Formänderung ausführen. Die maximale Einsatztemperatur liegt bei Formgedächtnislegierung-Stellelementen in der Regel bei 80 °C, in manchen Fällen auch bei 120 °C bis 170 °C, bei einem Thermobimetall bei 250 °C bis 550 °C. Ein Formgedächtnislegierung-Stellelement zeigt eine Temperaturhysterese von 15 °C bis 30 °C, ein Thermobimetall nicht. Das Arbeitsvermögen eines Formgedächtnislegierung-Stellelements ist hoch (typischer Wert 50 Nmm), eines Thermobimetalls gering (typischer Wert 5 Nmm). Die bisher praktisch eingesetzten Formgedächtnislegierung-Stellelemente benötigten für die Rückstellung eine Gegenkraft, ein Thermobimetall stellt sich selbsttätig zurück. Ein Formgedächtnislegierung-Stellelement verrichtet in der Regel Stellarbeit nur beim Erwärmen, ein Thermobimetall beim Erwärmen und Abkühlen.

Formgedächtnislegierungen eignen sich für thermische Stellelemente besonders gut, da sie Zug-, Druck-, Biegungs- oder Torsionsbewegungen ausführen können. Formgedächtnislegierungen weisen mit über 1 kJ/kg die höchste Energiedichte aller Aktorprinzipien auf, was sie für Antriebsaufgaben interessant macht, bei denen auf kleinstem Raum eine hohe mechanische Arbeit aufgebracht werden muss. Aktoren auf Basis von Formgedächtnislegierungen haben sich in der Automobilindustrie etwa als Ent- und Verriegelung der Tankklappen, Leuchtweitenregulierung der Scheinwerfer und Steuerung der Lüftungsklappen in Klimaanlagen bewährt. Aber auch in der Luftfahrt können sie die Entriegelung der Sauerstoffmasken in Passagierflugzeugen übernehmen. Ganz intensiv macht sich auch die Medizintechnik die vorteilhaften Eigenschaften von Formgedächtnislegierungen zu Nutze, nämlich geringes Gewicht, kleines Einbauvolumen und relativ hohe Kräfte.

Während bei herkömmlichen, das heißt nicht aus einer Formgedächtnislegierung bestehenden Metallen Umwandlungen von der einen in eine andere Phase in der Regel irreversibel sind, haben Formgedächtnislegierungen die Fähigkeit der reversiblen Phasenumwandlung. Die Phase - und damit die Form - in der sich die Legierung befindet, ist dabei von der Temperatur abhängig. Bei niedrigen Temperaturen liegt Martensit vor. Bei hohen Temperaturen Austenit. Der Übergang zwischen beiden Phasen ist eine Hysterese-behaftete Funktion der Temperatur, das heißt die Gefügeumwandlung beim Erwärmen und beim Abkühlen erfolgt bei unterschiedlichen Temperaturen. Diese Hysterese wird durch die Übergangstemperaturen As, Af, Ms und Mf (Austenit start, Austenit finish, Martensit start, Martensit finish) beschrieben. Je nach Temperatur besteht das Gefüge aus unterschiedlichen Mengen an Martensit und Austenit. Typische Werte für die Temperaturhysterese bei der Austenit-Martensit-Umwandlung sind 15 K bis 30 K. Wenn aber durch eine thermomechanische Behandlung die Austenit-R-Phase-Umwandlung erzeugt wird, sind kleinere Hysteresewerte von bis zu 3 K erreichbar.

Durch die reversible Phasenumwandlung von Formgedächtnislegierungen ist es möglich, mechanische Verformungen von Formgedächtnislegierungen in der Niedrigtemperaturphase durch Wärmezufuhr rückgängig zu machen. Das Material "erinnert" sich quasi an seine ursprüngliche Form. Dabei sind Dehnungen und Schrumpfungen von bis zu acht Prozent möglich. Allerdings bewirkt ein Abkühlen eines Materials mit Einweg-Effekt nicht, dass die Formgedächtnislegierung wieder den verformten Zustand annimmt. Deshalb ist eine auf die Formgedächtnislegierung wirkende Vorspannkraft erforderlich, um eine Verformung während des Abkühlens zu erreichen.

Arbeitet das Material bei der Rückverformung gegen eine Last, können sehr hohe Kräfte mit nur gering eingesetzten Materialmengen erzeugt werden. Ein zwei Millimeter dicker Formgedächtnisdraht kann beispielsweise eine Last von mehr als 100 kg anheben. Dieses besondere Verhalten ermöglicht es, konventionelle Aktoren durch platzsparende Formgedächtnislegierung-Aktoren zu ersetzen. Die Formgebung von Formgedächtnislegierung-Aktoren ist flexibel, verbreitet sind Drähte und Schraubenfedern.

Formgedächtnislegierungen zeigen drei Arten der Formänderung, die mit Formgedächtnis verknüpft sind. Am Beispiel eines streifenförmigen Biegeelements können diese wie folgt veranschaulicht werden:
a) Einweg-Effekt: Nach dem Entfernen einer mechanischen Belastung zeigt das Stellelement eine bleibende Deformation. Diese scheinbar plastische Verformung bildet sich beim Erwärmen wieder vollständig zurück.
b) Zweiweg-Effekt: Neben dem Einweg-Effekt tritt auch beim Abkühlen eine definierte Formänderung auf.
c) Pseudoelastizität/Superelastizität: Durch eine mechanische Belastung kann das Stellelement bis zu mehreren Prozent gedehnt werden. Beim Entlasten geht es trotzdem wieder in seine Ausgangsform zurück.

Der Einweg-Effekt (thermischer Memory-Effekt) ist eine Eigenschaft, die in Formgedächtnislegierungen quasi eingebaut ist. Nach einer mechanischen Verformung unterhalb der Martensit-Start-Temperatur kehrt die Formgedächtnislegierung durch Erwärmung wieder in ihre Ursprungsform zurück und es findet eine Phasenumwandlung in die Austenitphase statt. Nach dem Abkühlen und der Phasenumwandlung in die Martensitphase bleibt diese Form bis zur erneuten Verformung erhalten. Der Formgedächtniseffekt geht mit einer Strukturumwandlung einher. Bei hoher Temperatur ist die Legierung austenitisch, bei tieferen Temperaturen martensitisch. Wird ein Bauteil einer martensitischen Formgedächtnislegierung unterhalb einer kritischen Temperatur verformt, so findet nur eine reversible Formänderung statt. Sobald das Bauteil über die Umwandlungstemperatur erwärmt wird, bildet sich Austenit mit der ursprünglich vorhandenen Orientierung, sodass das Bauteil in seine ursprüngliche Form zurückkehrt, wobei die gesamte Formänderung wieder zurückgebildet werden kann. Die maximale reversible Dehnung beträgt beispielsweise bei NiTi 10,7 %.

Da dieser Effekt nur beim Erwärmen auftritt, also nur in einer Richtung, eine anschließende Abkühlung und Erwärmung keine weitere Formänderung bewirkt, wird er als Einweg-Effekt bezeichnet. Die ursprüngliche Gedächtnisgestalt wird vor der Belastung durch Wärmebehandlung in das Bauteil eingeprägt. Wird die freie Wegänderung während der Rückumwandlung in den Austenit behindert, so treten hohe Kräfte auf, die zum Verrichten von Arbeit genutzt werden können. Dies ist die Grundlage der Formgedächtnislegierung-Aktorik. Bei einem Formgedächtnislegierung-Stellelement mit Einweg-Effekt ist eine Rückstellkraft erforderlich, um eine Rückbildung der Verformung während des Abkühlens zu erreichen.

Diese Rückstellkraft wird von einem weiteren Bauteil, beispielsweise einer Rückstellfeder, bereitgestellt.

Der Zweiweg-Effekt von Formgedächtnislegierungen ist dagegen eine "anerzogene" Eigenschaft. Eine entsprechend trainierte Formgedächtnislegierung kann sowohl beim Erwärmen als auch beim Abkühlen jeweils eine definierte Form annehmen, das heißt Bauteile mit Zweiwegeffekt erinnern sich sowohl an eine Hochtemperatur- als auch an eine Niedertemperaturform. Beim Zweiweg-Effekt tritt eine Formänderung sowohl beim Erwärmen als auch beim Abkühlen auf, ohne dass eine externe Last erforderlich ist. Eine Gestaltänderung ist ohne erneute Verformung wiederholbar. Allerdings ist die erreichbare Formänderung grundsätzlich geringer als beim Einweg-Effekt, dafür kann ein zusätzliches Federelement zum Erzeugen der Rückstellkraft eingespart werden.

Der Effekt der Superelastizität findet oberhalb der Austenit-Endtemperatur statt. Durch äußere mechanische Spannung findet eine spannungsinduzierte martensitische Phasenumwandlung statt. Bei Nachlassen der Spannung entsteht wieder Austenit. Dadurch ist eine starke elastische Verformung ohne Temperaturänderung möglich.

Die Technologie der Stellelemente aus Formgedächtnislegierungen bietet viele Vorteile, etwa große Stellkraft, Flexibilität, Komfort, Unempfindlichkeit, Sicherheit, einfacher Aufbau, geringer Platzbedarf, Zuverlässigkeit, Genauigkeit, hohe Lebensdauer und Standfestigkeit, geringe Ermüdung auch bei vielen Bewegungszyklen, geräuschlose Betätigung, geringes Gewicht und autarke Arbeitsweise. Sie erlauben die Integration von Sensorfunktionen. Ihr Einsatz ist insbesondere dann sinnvoll, wenn eine Bewegung zwischen zwei definierten Endpunkten stattfindet, geringe Dynamikanforderungen herrschen, keine Zwischenpositionen oder Lageregelungen durchzuführen sind, kritische Umgebungsmedien vorhanden sind und besonders strikte Anforderungen bezüglich Raum und/oder Gewicht herrschen.

Thermische Stellelemente aus einer Formgedächtnislegierung sind nach dem Stand der Technik zumeist Bauteile, die eine Komponente aus einer massiven Formgedächtnislegierung aufweisen, wobei die häufigste Ausführungsform eine Spiral- oder Blattfeder ist. In der Regel arbeiten die Formgedächtnislegierung-Stellelemente mit dem intrinsischen Einweg-Effekt, wobei zumeist konventionelle zylindrische Schraubenfedern zum Erzeugen der Rückstellkraft eingesetzt werden. In Fällen, in denen geringere Stellkräfte erzeugt werden, werden auch Formgedächtnislegierung-Stellelemente mit dem extrinsischen Zweiweg-Effekt eingesetzt.

Ferner sind Formgedächtnislegierung-Stellelemente bekannt, bei denen auf eine massive Schicht aus einer Formgedächtnislegierung unzertrennbar eine zweite Komponente aus einem anderen, konventionellen Werkstoff aufplattiert, das heißt stoffschlüssig damit verbunden ist. Diese zweite Komponente dient zum Erzeugen der Rückstellkraft. Bei derartigen plattierten Stellelementen ist die Anwendung sehr eingeschränkt und die erzeugbaren Stellkräfte oder Stellwege sind beschränkt, weil aufgrund der unterschiedlichen mechanischen Eigenschaften der beiden fest miteinander verbundenen Schichten die Dickenverhältnisse der Komponenten differenziert aufeinander angepasst werden müssen.

Damit ein ein- oder zweiseitig eingespanntes streifenförmiges thermisches Stellelement mit einer stellkrafterzeugenden Schicht eine größere Stellkraft erzeugen kann, muss nach dem Stand der Technik der Querschnitt der stellkrafterzeugenden Schicht des Stellelements vergrößert werden, weil die Spannung, die bei Auslenkung des Stellelements in dem Material der stellkrafterzeugenden Schicht auftritt, einen maximal zulässigen Wert nicht überschreiten darf, um die elastische Rückverformung zu gewährleisten. Die Querschnittsvergrößerung kann durch eine größere Breite und/oder durch eine größere Dicke der stellkrafterzeugenden Schicht des Stellelements realisiert werden. Eine deutliche Verbreiterung der steilkrafterzeugenden Schicht des Stellelements scheitert zumeist am begrenzten Bauraum.

Eine Vergrößerung der Dicke der stellkrafterzeugenden Schicht des Stellelements hat aber zwangsläufig eine geringere elastische Auslenkung zur Folge, da sonst eine Überdehnung der Randfaser der stellkrafterzeugenden Schicht stattfindet. Insbesondere bei Formgedächtnislegierungen ist eine ausgeprägte Abhängigkeit der Lebensdauer von der maximal zulässigen Dehnung gegeben. Daher führt eine Verringerung der Dicke der stellkrafterzeugenden Schicht gleichzeitig zu einer geringeren Dehnbelastung in der äußeren Randfaser der Schicht, was wiederum die Lebensdauer-Zyklen-Zahl deutlich erhöht. Aber bei einer Verringerung der Dicke der stellkrafterzeugenden Schicht verringert sich auch die zu übertragende Stellkraft.

Eine Lösung dieses Problems kann durch die Verwendung geschichteter Stellelemente mit einer geschichteten Anordnung zu einem Paket verbundener, streifenförmiger, stellkrafterzeugender Schichten erreicht werden. Durch diese Aufschichtung können größere Kräfte bei gleichzeitiger hoher elastischer Auslenkung übertragen werden. Geschichtete Anordnungen mit mehreren, zu einem Paket verbundenen streifenförmigen Schichten aus einer Formgedächtnislegierung sind jedoch bisher wenig bekannt.

Aus der US 3,784,108 ist ein streifenförmiger Schichtaufbau eines Stellelements mit Formgedächtnislegierungen bekannt. Es umfasst zwei Schichten aus einer Formgedächtnislegierung (Nitinol), zwischen denen eine wärmeleitende Schicht aus einem massiven, gut wärmeleitenden Material wie Kupfer oder Silber angeordnet ist. Die wärmeleitende Schicht dient dazu, die Wärme gleichmäßiger oder schneller in den Schichten aus einer Formgedächtnislegierung zu verteilen, da Formgedächtnislegierungen selbst eine geringe Wärmeleitung aufweisen. Da Kupfer und Silber weiche Metalle sind, die beim Aktivieren des Stellelements plastisch verformt werden, bewirkt die wärmeleitende Schicht keine Rückstellung des Stellelements in die Ausgangsstellung beim Abkühlen, sodass hierzu wie üblich ein weiteres Federelement erforderlich ist.

Aus der JP 2000-303948 A ist ein streifenförmiger Schichtaufbau eines Blattfeder-Stellelements mit Formgedächtnislegierungen bekannt. Es umfasst zwei Schichten aus einer Formgedächtnislegierung, zwischen denen eine wärmeerzeugende Schicht angeordnet ist, die aus einer Keramik besteht. Die wärmeerzeugende Keramikschicht dient zum Beheizen der Formgedächtnislegierungen. Auch hier ist zum Rückstellen des Steilelements in die Ausgangsstellung beim Abkühlen ein weiteres Federelement erforderlich. Ferner begrenzt die Keramikschicht die maximal mögliche Auslenkung des Stellelements.

Aus der DE 101 08 634 A1 ist ein Schaltelement mit zwei stellkrafterzeugenden Schichten aus je einer Formgedächtnislegierung bekannt. Zwischen den stellkrafterzeugenden Schichten ist eine einschichtige, rückstellkrafterzeugende Schicht eines federelastischen Heizelements angeordnet. Die stellkrafterzeugenden Schichten haben unterschiedliche Schalttemperaturen. In dem Temperaturbereich zwischen der Schalttemperatur der ersten Schicht und der Schalttemperatur der zweiten Schicht muss daher bei der weiteren Auslenkung des Schaltelements die Gegenkraft der Formgedächtnislegierung mit der ersten Schalttemperatur, die schon umgewandelt ist, überwunden werden. Oberhalb der ersten Schalttemperatur liegt die Formgedächtnislegierung mit der ersten Schalttemperatur nämlich nicht mehr im martensitischen Zustand mit einer geringen Festigkeit, sondern im austenitischen oder spannungsinduzierten Zustand vor, in Abhängigkeit von dem Umformgrad. Infolgedessen übt bei der Verformung oberhalb der ersten Schalttemperatur die Formgedächtnislegierung mit der ersten Schalttemperatur eine Gegenkraft aus, die von der Formgedächtnislegierung mit der zweiten Schalttemperatur überwunden werden. Hierzu muss die Schicht mit der Formgedächtnislegierung mit der zweiten Schalttemperatur mit einem viel größeren Querschnitt ausgelegt werden, als es ohne die von der Schicht mit der Formgedächtnislegierung mit der ersten Schalttemperatur ausgeübte Gegenkraft erforderlich wäre. Dies hat Nachteile zur Folge, beispielsweise höhere Kosten, ein größeres Bauvolumen und eine Verkleinerung des erzielbaren Verformungsgrades.

Aus der DE 298 16 653 U1 ist ein Aktor mit einer Schicht aus einer Formgedächtnislegierung, einem Heizelement und einer Rückstellfeder bekannt. Die Formgedächtnislegierung ist durch eine punktuelle mechanische Verbindung mit dem Heizelement verbunden.

Die DE 198 29 202 A1 offenbart einen Verbundwerkstoff, der eingelegte Fasern aus einer Formgedächtnislegierung umfasst. Er wird durch Anlegen einer äußeren elektrischen Spannung aktiviert. Ein Schichtaufbau und eine Rückstellkraft sind nicht ersichtlich.

Prinzipiell wäre es möglich, ein geschichtetes thermisches Stellelement durch eine geschichtete Anordnung zu einem Paket verbundener, streifenförmiger, stellkrafterzeugender Schichten, die unmittelbar aufeinanderliegend angeordnet werden, das heißt ohne dass zwischen benachbarten stellkrafterzeugenden Schichten eine weitere Schicht aus einem keine Stellkraft erzeugenden anderen Material angeordnet wird, zu realisieren. Zusammengehalten werden könnte ein solcher Verbund durch ein etwa in der Mitte des Stellelements angreifendes Spannelement, beispielsweise ein Spannbügel, eine Spannklammer, ein Spannring oder eine Federklammer. Eine Fixierung durch eine mittige Verschraubung oder Vernietung der Schichten untereinander sollte dagegen wegen der hierbei notwendigen Lochung der Schichten und der daraus entstehenden Kerbwirkung vermieden werden. Bei solchen geschichteten Stellelementen ist allerdings zum Rückstellen des Stellelements in die Ausgangsstellung beim Abkühlen ein weiteres (externes) Federelement erforderlich.

Ausgehend von diesem Stand der Technik liegt der vorliegenden Erfindung die Aufgabe zugrunde, ein thermisches Stellelement mit einer Formgedächtnislegierung zu schaffen, das bei einer großen Auslenkung hohe Stellkräfte erzeugen kann und ohne oder weitgehend ohne externes Federelement zum Rückstellen des Stellelements aus der aktivierten Stellung in die Ausgangsstellung auskommt.

Diese Aufgabe wird erfindungsgemäß durch ein thermisches Stellelement mit den Merkmalen des beigefügten Anspruchs 1 gelöst. Bevorzugte Ausgestaltungen, Weiterbildungen und Verwendungen der Erfindung ergeben sich aus den abhängigen Ansprüchen und der nachfolgenden Beschreibung mit zugehörigen Zeichnungen.

Ein erfindungsgemäßes thermisches Stellelement, das aus einer Ausgangsstellung bei einer Temperaturänderung, die zum Überschreiten oder Unterschreiten einer Schalttemperatur führt, beim Erreichen der Schalttemperatur eine Verbiegung oder elastische Auslenkung in eine aktivierte Stellung durchführt, wobei die Verbiegung oder Auslenkung eine Stellkraft erzeugt, die als thermosensitive Aktorik nutzbar ist, und bei einem Rückgang der Temperaturänderung, die zum Unterschreiten bzw. Überschreiten der Schalttemperatur führt, aus der aktivierten Stellung in die Ausgangsstellung zurückkehrt, mit einer geschichteten Anordnung zu einem Paket verbundener streifenförmiger Schichten, wobei mindestens eine der Schichten eine stellkrafterzeugende Schicht ist, die bei der Temperaturänderung die Stellkraft des Stellelements erzeugt, und die stellkrafterzeugende Schicht aus einer Formgedächtnislegierung gebildet ist, weist die Besonderheit auf, dass das Paket mehrere stellkrafterzeugende Schichten aufweist, die jeweils aus einer Formgedächtnislegierung gebildet sind, wobei die Formgedächtnislegierungen der stellkrafterzeugenden Schichten dieselben sind oder dieselbe Schalttemperatur aufweisen, und zwischen mindestens zwei benachbarten stellkrafterzeugenden Schichten eine rückstellkrafterzeugende Schicht angeordnet ist, die aus einem Metall oder einer Metalllegierung gebildet ist und die bei der Verbiegung oder Auslenkung des Stellelements eine mechanische Rückstellkraft erzeugt, die als Gegenkraft zu der Stellkraft wirkt und bei einem Rückgang der Temperaturänderung die Rückstellung des Stellelements in die Ausgangsstellung bewirkt.

Bei einem thermischen Stellelement mit einer stellkrafterzeugenden Schicht aus einer Formgedächtsnislegierung ist die Schalttemperatur des Stellelements die Temperatur, bei deren Erreichen sich seine Form ändert, das heißt das Stellelement eine Verbiegung oder elastische Auslenkung in eine aktivierte Stellung durchführt, wobei die Verbiegung oder Auslenkung eine Stellkraft erzeugt, die als thermosensitive Aktorik nutzbar ist. Die Schalttemperatur entspricht somit der bzw. einer Übergangstemperatur der Formgedächtsnislegierung des Stellelements, wobei die Übergangstemperatur oft auch als Umwandlungstemperatur bezeichnet wird. Erfindungsgemäß sind die Formgedächtnislegierungen der stellkrafterzeugenden Schichten dieselben oder sind Formgedächtnislegierungen mit derselben Schalttemperatur. Dadurch wird ermöglicht, dass das Stellelement insgesamt eine einzige Schalttemperatur aufweist, bei der die Auslenkung erfolgt, wobei alle stellkrafterzeugende Schichten des Stellelements, die aus einer Formgedächtnislegierung bestehen, gemeinsam bei der Schalttemperatur die Auslenkung bewirken.

Das Merkmal der gleichen Schalttemperatur ist dabei so zu verstehen, dass alle stellkrafterzeugende Schichten des Stellelements, die aus einer Formgedächtnislegierung bestehen, auf nominell dieselbe Schalttemperatur ausgelegt sind, wobei jedoch in der Praxis geringfügige Abweichungen, beispielsweise aufgrund von Fertigungstoleranzen, auftreten können, sowohl wenn die Formgedächtnislegierungen der stellkrafterzeugenden Schichten dieselben sind als auch insbesondere wenn sie verschieden sind. In der Praxis wird man in der Regel zur Reduzierung eventueller Streuungen und Abweichungen die stellkrafterzeugenden Schichten bevorzugt aus derselben Formgedächtnislegierung fertigen. In anderen Ausführungsformen kann es auch zweckmäßig sein, zur Erzielung einer besseren Durchwärmung des Stellelements die stellkrafterzeugenden Schichten aus verschiedenen Formgedächtnislegierungen mit derselben Schalttemperatur herzustellen, wobei wegen ihrer guten Wärmeleiteigenschaften insbesondere Legierungen auf Cu-Basis eingesetzt werden können.

Die erfindungsgemäße geschichtete Anordnung von Schichten aus steilkrafterzeugenden Formgedächtnislegierungen und dazwischen angeordneten rückstellkrafterzeugenden Schichten aus einem Metall oder einer Metalllegierung bietet viele Vorteile. Es können in den Sandwichverbund als intrinsische Gegenkraft wirkende Blattfedern aus Stahl eingebracht werden, und das in beliebiger Reihenfolge und Schichtdicke. Ebenso ist die Anzahl der verschieden Schichten frei wählbar. Dieser Vorteil ist besonders wichtig, da aufgrund der um Faktoren unterschiedlichen E-Module von Formgedächtnislegierungen und Metallen wie Federstahl die maximal zulässige elastische Auslenkung von Stahl entsprechend geringer ist als bei Formgedächtnislegierungen.

Ein zur Erzielung einer bestimmten Stellkraft notwendiger massiver Querschnitt wird erfindungsgemäß durch die Summe der stellkrafterzeugenden Schichten, die jeweils aus einer Formgedächtnislegierung gebildet sind, realisiert, wobei die Summe der Querschnitte der stellkrafterzeugenden Schichten dem Querschnitt einer vergleichbaren einzelnen, massiven, stellkrafterzeugenden Schicht mit der gewünschten Stellkraft entspricht. Entsprechendes kann in vorteilhaften Ausführungsformen auch für die rückstellkrafterzeugenden Schichten gelten. In beiden Fällen kann durch Aufteilen der Gesamtschicht in beliebig dünne Schichtdicken entweder eine viel größere elastische Auslenkung oder eine viel höhere Schaltzyklenfestigkeit erreicht werden. In der Praxis wird man für den jeweiligen Anwendungsfall anstreben, mit der geringst möglichen Anzahl von Schichten das gewünschte Ziel zu erreichen, da mit dünner werdenden Schichten die Fertigungskosten steigen.

In einem Stellelement können vorzugsweise zwei, drei, vier, fünf, sechs, sieben oder mehr rückstellkrafterzeugende Schichten aus einem Metall oder einer Metalllegierung vorgesehen sein, die jeweils zwischen jeweils zwei benachbarten stellkrafterzeugenden Schichten angeordnet sind. Dabei ist die Anzahl solcher Schichten nicht beschränkt und kann auch mehr als 10 oder 20 Schichten umfassen. In bevorzugten Ausführungsformen kann zwischen allen jeweils benachbarten stellkrafterzeugenden Schichten des Stellelements jeweils eine rückstellkrafterzeugende Schicht oder eine andere, nicht stellkrafterzeugende Schicht angeordnet sein, sodass das Stellelement keine geschichtete stellkrafterzeugende Schicht aufweist. Der obere und/oder untere Abschluss eines geschichteten Stellelements kann wahlweise durch eine stellkrafterzeugende, eine rückstellkrafterzeugende Schicht oder eine andere Schicht gebildet werden.

Damit das erfindungsgemäße geschichtete Stellelement mit Schichten sowohl aus Formgedächtnislegierungen als auch aus Metallen oder Metalllegierungen eine große maximale elastische Auslenkung erreichen kann, die durch die Formgedächtnislegierungen gegeben ist, wird nach einem weiteren vorteilhaften Merkmal vorgeschlagen, dass das Stellelement mindestens eine geschichtete rückstellkrafterzeugende Schicht aufweist, die aus einer geschichteten Anordnung zu einem Paket verbundener streifenförmiger Schichten aus einem Metall oder einer Metalllegierung gebildet ist. Eine solche geschichtete rückstellkrafterzeugende Schicht kann vorzugsweise aus zwei, drei, vier, fünf, sechs, sieben oder mehr Schichten aus einem Metall oder einer Metalllegierung gebildet sein, wobei die Anzahl der Schichten nicht beschränkt ist und auch mehr als 10 oder 20 Schichten umfassen kann. Die einzelnen Schichten in einer solchen geschichteten rückstellkrafterzeugenden Schicht sind dünner als die stellkrafterzeugenden Schichten aus Formgedächtnislegierung, sodass in ihren Randfasern eine geringe Dehnung auftritt als in den stellkrafterzeugenden Schichten. Durch eine entsprechend große Anzahl dünner rückstellkrafterzeugender Schichten, zum Beispiel Stahlelemente, kann dennoch die notwendige Gegenkraft zu der Stellkraft zum Rückstellen des Stellelements in die Ausgangsstellung aufgebracht werden.

In einem Stellelement können vorzugsweise zwei, drei, vier, fünf, sechs, sieben oder mehr geschichtete rückstellkrafterzeugende Schichten aus einem Metall oder einer Metalllegierung vorgesehen sein, wobei die Anzahl der Schichten nicht beschränkt ist und auch mehr als 10 oder 20 Schichten umfassen kann. Bevorzugt sind alle rückstellkrafterzeugenden Schichten des Stellelements aus einem Metall oder einer Metalllegierung als geschichtete rückstellkrafterzeugende Schichten ausgebildet.

Bei einem erfindungsgemäßen Stellelement ist die rückstellkrafterzeugende Schicht aus einem elastischen Material gebildet, das keine Formgedächtnislegierung ist. Gemäß einem vorteilhaften Merkmal wird vorgeschlagen, dass die rückstellkrafterzeugende Schicht aus einem Federwerkstoff, Stahl oder Edelstahl gebildet ist. Sie kann beispielsweise wie eine Stahlblattfeder aufgebaut sein, optional wie vorstehend erläutert als geschichtete Stahlblattfeder. Die rückstellkrafterzeugende Schicht kann in vorteilhaften Ausführungsformen aus Nickel, Silber, Gold, Platin, Palladium, Stahl, Edelstahl, Kobalt, Molybdän, Niob, Tantal, Titan oder einer Legierung mit einem oder mehreren dieser Stoffe gebildet sein.

Ein Stellelement kann eine oder mehrere geschichtete stellkrafterzeugende Schichten aufweisen, die jeweils aus einer geschichteten Anordnung zu einem Paket verbundener streifenförmiger stellkrafterzeugender Schichten aus jeweils einer Formgedächtnislegierung gebildet sind. Eine solche geschichtete stellkrafterzeugende Schicht kann vorzugsweise aus zwei, drei, vier, fünf, sechs oder mehr Schichten aus jeweils einer Formgedächtnislegierung gebildet sein, wobei die Anzahl der Schichten nicht beschränkt ist und auch mehr als 10 oder 20 Schichten umfassen kann. In einem Stellelement können vorzugsweise zwei, drei, vier, fünf, sechs, sieben oder mehr geschichtete stellkrafterzeugende Schichten vorgesehen sein, die jeweils aus einer Formgedächtnislegierung gebildet sind, wobei die Anzahl der Schichten nicht beschränkt ist und auch mehr als 10 oder 20 Schichten umfassen kann. Bevorzugt können alle stellkrafterzeugenden Schichten des Stellelements aus einer Formgedächtnislegierung als geschichtete stellkrafterzeugende Schichten ausgebildet sein.

Gemäß einem weiteren vorteilhaften Merkmal kann vorgesehen sein, dass das Paket verbundener streifenförmiger Schichten mindestens eine wärmeerzeugende Schicht aufweist, die als elektrische Widerstandsheizung ausgebildet ist und die zum Erwärmen oder Betätigen des Stellelements mittels eines durch sie hindurchfließenden Stromes aufheizbar ist. Im Gegensatz zu einer externen Beheizung des Stellelements kann hierdurch eine interne, direkte Erwärmung des Stellelements erfolgen. Damit ist die Temperaturänderung, die zum Erzeugen der Stellkraft führt, schneller oder homogener erzielbar, als sie bei einer externen Erwärmung des Stellelements im Hinblick auf die geringe Wärmeleitfähigkeit der Formgedächtnislegierung als auch den geschichteten Aufbau möglich wäre. Da die Wärmeleitfähigkeit von Formgedächtnislegierungen wie NiTi 60 mal kleiner als die von Kupfer ist, erfolgt die Durchwärmung dicker massiver Stellelemente bei indirekter bzw. externer Erwärmung recht träge und unter Umständen sogar ungleichmäßig. Bei geschichteten Stellelementen kann durch Einbringen wärmezeugender Heizelemente in Schichten, beispielsweise in einem Sandwich-Aufbau, diesbezüglich eine Verbesserung erreicht werden. Die wärmeerzeugende Schicht kann beispielsweise als Heizfolie, Heizleiter, Heizwiderstand oder mäanderförmig angeordneter Widerstanddraht ausgebildet sein. Diese elektrisch beheizten Heizelemente können beliebig häufig und eventuell mit unterschiedlicher Dicke in den Verbund eingebracht werden. Dabei kann es zweckmäßig sein, sie durch eine elektrische Isolierschicht, z.B. in Form eines Lacks oder einer Folie, elektrisch zu isolieren bzw. gegen elektrischen Kurzschluss zu schützen.

Gemäß einer bevorzugten Ausführungsform kann vorgesehen sein, dass mindestens eine rückstellkrafterzeugende Schicht gleichzeitig als wärmeerzeugende Schicht ausgebildet ist. In diesem Fall werden in einem Material bzw. in einer Schicht die rückstellkrafterzeugende und die wärmeerzeugende Eigenschaft vereint, das heißt die zwischen benachbarten stellkrafterzeugenden Schichten angeordnete Schicht oder Schichten dient bzw. dienen gleichzeitig zum Erzeugen einer mechanischen Spannung als Rückstellkraft und zum elektrischen Beheizen des Stellelements. Die Materialien, die für solche Schichten in Frage kommen, sind dieselben wie für die rückstellkrafterzeugende Schicht, vorzugsweise Stahl oder Federstahl.

In einer weiteren vorteilhaften Ausbildung kann vorgesehen sein, dass das Paket verbundener streifenförmiger Schichten mindestens eine wärmeleitende Schicht aus einem massiven, gut wärmeleitenden Material aufweist. Eine solche Schicht kann die Wärmeverteilung in dem Stellelement verbessern. Damit ist die Temperaturänderung, die zum Erzeugen der Stellkraft führt, schneller oder homogener erzielbar, als sie ohne wärmeleitfähige Schicht möglich wäre. Die wärmeleitende Schicht kann beispielsweise aus Kupfer, Silber oder einer Legierung aus diesen Materialien gebildet sein. Die wärmeleitende Schicht kann beispielsweise als Wärmeleitfolie ausgebildet sein. Diese wärmeleitenden Schichten können beliebig häufig und eventuell mit unterschiedlicher Dicke in den Verbund eingebracht werden.

Gemäß einem bevorzugten Merkmal wird vorgeschlagen, dass mindestens eine rückstellkrafterzeugende Schicht gleichzeitig als wärmeleitende Schicht ausgebildet ist. In diesem Fall werden in einem Material bzw. in einer Schicht die rückstellkrafterzeugende und die wärmeleitende Eigenschaft vereint, das heißt die zwischen benachbarten stellkrafterzeugenden Schichten angeordnete Schicht oder Schichten dient bzw. dienen gleichzeitig zum Erzeugen einer mechanischen Spannung als Rückstellkraft und zum Verteilen der Wärme in dem Stellelement. Die Materialien, die für solche Schichten in Frage kommen, sind Metalle mit guter mechanischer Eigenschaft und hoher Wärmeleitfähigkeit, vorzugsweise NiBe und Legierungen auf Cu-Basis, zum Beispiel CuBe.

In vorteilhaften Ausführungsformen kann vorgesehen sein, dass mindestens eine rückstellkrafterzeugende Schicht gleichzeitig sowohl als wärmeerzeugende Schicht als auch als wärmeleitende Schicht ausgebildet ist. In diesem Fall werden in einem Material bzw. in einer Schicht die rückstellkrafterzeugende, die wärmeerzeugende und die wärmeleitende Eigenschaft vereint, das heißt die zwischen benachbarten stellkrafterzeugenden Schichten angeordnete Schicht oder Schichten dient bzw. dienen gleichzeitig zum Erzeugen einer mechanischen Spannung als Rückstellkraft und zum elektrischen Beheizen des Stellelements sowie zum Verteilen der Wärme in dem Stellelement. Die Materialien, die für solche Schichten in Frage kommen, sind dieselben wie für die wärmeleitende Schicht.

Gemäß einer bevorzugten Ausführungsform wird vorgeschlagen, dass die Formgedächtnislegierungen der stellkrafterzeugenden Schichten Formgedächtnislegierungen mit Einweg-Effekt sind. Bei einer solchen können größere Stellkräfte oder größer Stellwege als mit einer Formgedächtnislegierung mit Zweiweg-Effekt erzielt werden, wobei aufgrund der erfindungsgemäßen rückstellkrafterzeugenden Schicht dennoch auf ein externes Federelement zum Rückstellen des Stellelements verzichtet werden kann. In anderen Ausführungsformen, je nach Verwendung des Stellelements, können die Formgedächtnislegierungen der stellkrafterzeugenden Schichten aber auch Formgedächtnislegierungen mit Zweiweg-Effekt sein. Auch Mischformen sind möglich, bei denen manche stellkrafterzeugende Schichten aus einer Formgedächtnislegierung mit Einweg-Effekt und andere stellkrafterzeugende Schichten aus einer Formgedächtnislegierung mit Zweiweg-Effekt bestehen.

Die Temperaturänderung, welche die Stellkraft des Stellelements erzeugt und aus einer Ausgangsstellung bei der Temperaturänderung eine Verbiegung oder elastische Auslenkung des Stellelements in eine aktivierte Stellung verursacht, ist bevorzugt und in der Regel eine Temperaturerhöhung, kann in besonderen Ausführungsformen aber auch eine Temperaturverringerung sein. Ein erfindungsgemäßes Stellelement kann vorzugsweise zwei, drei, vier, fünf, sechs, sieben oder mehr stellkrafterzeugende Schichten aus Formgedächtnislegierung aufweisen, wobei die Anzahl der Schichten aus Formgedächtnislegierung nicht beschränkt ist und auch mehr als 10 oder 20 Schichten umfassen kann. Bevorzugt sind alle stellkrafterzeugenden Schichten des Stellelements aus einer Formgedächtnislegierung gebildet.

Die Formgedächtnislegierungen der stellkrafterzeugenden Schichten können beispielsweise eine oder mehrere der folgenden sein: NiTi-Basis-Formgedächtnislegierungen, zum Beispiel NiTi (Nitinol), NiTiCu, NiTiPd, NiTiFe, NiTiCr oder Beta-Titan; Cu-Basis- Formgedächtnislegierungen, zum Beispiel CuZn, CuZnAl oder CuAlNiMn; CuZnAI-Legierungen; CuAlNi-Legierungen; Fe-Basis- Formgedächtnislegierungen, zum Beispiel FePt, FeMnSi oder FeNiC; AgCd; InTi und NiAl.

Gemäß einer bevorzugten Bauform ist ein erfindungsgemäßes Stelielement in Form einer geschichteten streifenförmigen Blattfeder ausgebildet. Es entspricht dabei in der Form einem geschichteten, länglichen, gegebenenfalls dicken Blechstreifen, wobei unter einem Streifen jedes Bauteil verstanden wird, das im Wesentlichen lang und flach ist, egal ob gerade oder gekrümmt. Das Stellelement kann bevorzugt zum einseitigen Einspannen an einem Ende des Schichtaufbaus bzw. Streifens bzw. zum zweiseitigen Einspannen an beiden Enden des Schichtaufbaus bzw. Streifens ausgebildet sein. Typische oder bevorzugte Abmessungen eines erfindungsgemäßen Stellelements sind folgende: Länge 5 mm bis 15 cm, Breite 1 mm bis 5 cm, Dicke 0,5 mm bis 20 mm, Anzahl der Schichten beliebig.

Ein erfindungsgemäßes thermisches Stellelement mit stellkrafterzeugenden Schichten aus Formgedächtnislegierung bietet nicht nur den Vorteil, dass es bei einer großen Auslenkung hohe Stellkräfte erzeugen kann und ohne oder weitgehend ohne externes Federelement zum Rückstellen des Stellelements in die Ausgangsstellung beim Abkühlen auskommt. Aus der geringeren Materialbeanspruchung resultiert zudem eine höhere Lebensdauer. In weiteren Ausführungsformen kann auch eine schnellere Erwärmung sowie eine bessere Durchwärmung des Stellelements erreicht werden. Zusätzlich kann auf teure Plattiertechniken verzichtet werden. Im Vergleich zu den bekannten Ausführungen mit extern wirkenden zylindrischen Schraubenfedern als gegenkraft- bzw. rückstellkrafterzeugendem Element sind Bauraum-Einsparungen möglich.

Die Erfindung wird nachfolgend anhand in den Figuren dargestellter Ausführungsbeispiele näher erläutert. Die darin beschriebenen Besonderheiten können einzeln oder in Kombination miteinander eingesetzt werden, um bevorzugte Ausgestaltungen der Erfindung zu schaffen. Gleiche oder gleich wirkende Teile werden in den verschiedenen Figuren mit denselben Bezugszeichen bezeichnet und gewöhnlich nur einmal beschrieben, auch wenn sie bei anderen Ausführungsformen vorteilhaft eingesetzt werden können. Es zeigen:
- Figur 1: ein erfindungsgemäßes thermisches Stellelement mit vereinzelten Schichten,
- Figur 2: das Stellelement von Figur 1 mit zusammengefügten Schichten in der Ausgangsstellung,
- Figur 3: das Stellelement von Figur 2 in der aktivierten Stellung,
- Figur 4: eine perspektivische Aufsicht des Stellelements von Figur 2 mit einem Verbindungselement,
- Figur 5: eine perspektivische Unteransicht zu Figur 4,
- Figur 6: eine Abwandlung von Figur 1 mit geschichteten rückstellkrafterzeugenden Schichten,
- Figur 7: das Stellelement von Figur 6 mit zusammengefügten Schichten in der Ausgangsstellung,
- Figur 8: das Stellelement von Figur 7 in der aktivierten Stellung,
- Figur 9: eine Abwandlung von Figur 1 mit wärmeerzeugenden Schichten,
- Figur 10: eine Abwandlung von Figur 1 mit wärmeleitenden Schichten,
- Figur 11: eine Abwandlung von Figur 1 mit wärmeerzeugenden und wärmeleitenden Schichten,
- Figur 12: eine Abwandlung von Figur 10 mit einer externen Beheizung,
- Figur 13: das Stellelement von Figur 12 mit zusammengefügten Schichten in der Ausgangsstellung,
- Figur 14: das Stellelement von Figur 13 in der aktivierten Stellung,
- Figur 15: eine Abwandlung von Figur 1 mit in Längsrichtung der geschichteten Anordnung über die stellkrafterzeugenden Schichten aus der Anordnung herausragenden Schichten,
- Figur 16: das Stellelement von Figur 15 mit zusammengefügten Schichten in der Ausgangsstellung und
- Figur 17: das Stellelement von Figur 16 in der aktivierten Stellung.

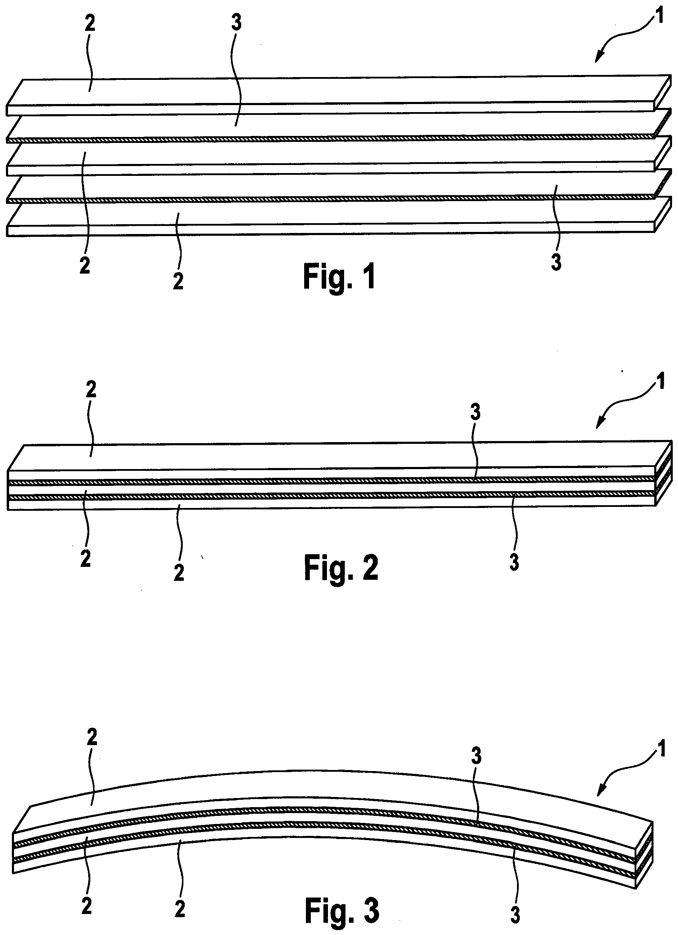

Die Figur 1 veranschaulicht ein Ausführungsbeispiel eines erfindungsgemäßen thermischen Stellelements 1 mit vereinzelt dargestellten Schichten, das heißt in einer Explosionsdarstellung, in der Ausgangsstellung. Es besteht aus einer geschichteten Anordnung zu einem Paket verbundener streifenförmiger Schichten mit stellkrafterzeugenden Schichten 2 und rückstellkrafterzeugenden Schichten 3. Die stellkrafterzeugenden Schichten 2 sind jeweils aus einer Formgedächtnislegierung gebildet, wobei die Formgedächtnislegierungen der stellkrafterzeugenden Schichten 2 dieselben sind oder dieselbe Schalttemperatur aufweisen. Die rückstellkrafterzeugenden Schichten 3 sind jeweils zwischen benachbarten stellkrafterzeugenden Schichten 2 angeordnet und aus einem elastischen Metall oder einer Metalllegierung gebildet, die keine Formgedächtniseigenschaften aufweist.

Die Figur 2 zeigt das Stellelement 1 von Figur 1 mit zusammengefügten Schichten in der Ausgangsstellung, das heißt in der Regel im kalten Zustand bzw. bei einer niedrigen Temperatur. Die Schichten der geschichteten Anordnung sind in der Regel nicht stoffschlüssig untereinander verbunden, sondern die Anordnung zu einem Paket verbundener streifenförmiger Schichten weist vorzugsweise ein (in Figur 2 nicht dargestelltes) Verbindungselement zum kraft- und/oder formschlüssigen Zusammenhalten der Schichten auf.

Die Figur 3 zeigt das Stellelement 1 von Figur 2 in der aktivierten Stellung das heißt in der Regel im warmen Zustand bzw. bei einer hohen Temperatur. Bei der zwischen von Figur 2 zu Figur 3 erfolgenden Temperaturänderung erzeugen die stellkrafterzeugenden, aus Formgedächtnislegierung gebildeten Schichten 2 bei der durch die Umwandlungstemperatur der verwendeten Formgedächtnislegierungen gegebenen gleichen Schalttemperatur die Stellkraft des Stellelements 1, das bei der Temperaturänderung aus der in Figur 2 dargestellten Ausgangsstellung eine Verbiegung oder elastische Auslenkung in die in Figur 3 dargestellte aktivierte Stellung durchführt. Die Verbiegung oder Auslenkung erzeugt somit eine Stellkraft, die als thermosensitive Aktorik nutzbar ist.

Bei dem von Figur 3 zu Figur 2 erfolgenden Rückgang der Temperaturänderung kehrt das Stellelement 1 aus der in Figur 3 dargestellten aktivierten Stellung in die in Figur 2 dargestellte Ausgangsstellung zurück, und zwar aufgrund der bei der Verbiegung oder Auslenkung des Stellelements 1 in der rückstellkrafterzeugenden Schicht 3 erzeugten mechanischen Rückstellkraft, die als Gegenkraft zu der Stellkraft wirkt und somit bei einem Rückgang der Temperaturänderung die Rückstellung des Stellelements 1 aus der aktivierten Stellung in die Ausgangsstellung bewirkt.

Dieser Zyklus zwischen Ausgangsstellung gemäß Figur 2 und aktivierter Stellung gemäß Figur 3 bei Temperaturänderung und anschließendem Rückgang der Temperaturänderung kann beliebig oft durchlaufen werden. Hierbei ist zum Rückstellen des Stellelements 1 aus der aktivierten Stellung in die Ausgangsstellung kein zusätzliches externes Federelement erforderlich, das heißt, die Rückstellung des Stellelements 1 kann allein durch die rückstellkrafterzeugenden Schichten 3 bewirkt werden, auch bei Formgedächtnislegierungen mit Einweg-Effekt. Das Stellelement 1 kann somit sehr kompakt sein und aufgrund der hohen Kräfte von Formgedächtnislegierungen eine große Stellkraft erzeugen und für Aktoranwendungen bereitstellen.

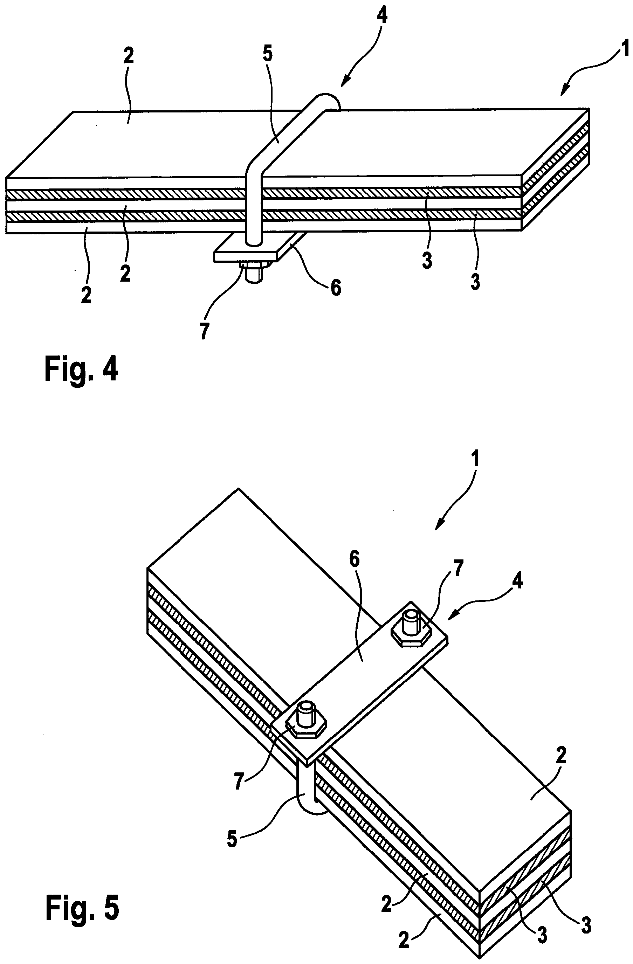

Die Figuren 4 und 5 zeigen das Stellelement 1 von Figur 2 mit einem Verbindungselement 4, das zum kraft- und/oder formschlüssigen Zusammenhalten der Schichten 2, 3 dient. Hierbei ist zur Vermeidung einer Gefüge- oder Materialschwächung vorzugsweise keine das Stellelement 1 durchdringende Bohrung, beispielsweise zum Verschrauben oder Vernieten der Schichten 2, 3 miteinander, vorgesehen, sondern das Verbindungselement 4 ist bevorzugt als separate, externe Halte-, Klemm- oder Spanneinrichtung ausgebildet, die die Oberfläche des Pakets bzw. Verbunds von außen kontaktiert und zusammendrückt und die Schichten 2, 3 zusammenhält. Das Verbindungselement 4 ist vorzugsweise etwa in der Mitte des Stellelements 1 angeordnet und kann beispielsweise ein an dem Stellelement 1 angreifendes Spannelement sein, z.B. ein Spannbügel, eine Spannklammer, ein Spannring oder eine Federklammer. Entsprechende Verbindungselemente 4 können auch bei den anderen, im Folgenden darstellten Ausführungsformen vorgesehen sein und werden dort nicht gesondert beschrieben oder dargestellt. In den Figuren 4 und 5 ist das Verbindungselement 4 schematisch als u-förmiger Spannbügel 5 mit einer Gegenplatte 6 veranschaulicht. Die Gegenplatte 6 wird mittels Muttern 7 mit den zwei mit einem Gewinde versehenen Enden des Spannbügels 5 verbunden und dadurch wird das Paket bzw. der Verbund aus den Schichten 2, 3 zwischen Spannbügel 5 und Gegenplatte 6 zusammengedrückt und zusammengehalten.

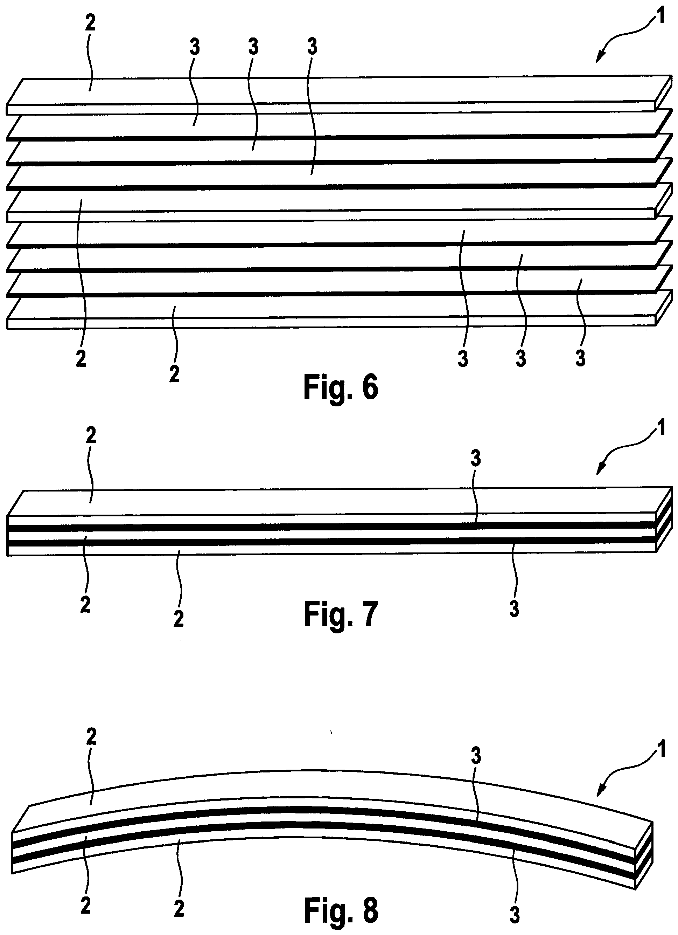

Die Figur 6 zeigt in einer Abwandlung von Figur 1 ein Stellelement 1 mit geschichteten rückstellkraftzeugenden Schichten, die aus einer geschichteten Anordnung zu einem Paket verbundener streifenförmiger Schichten 3 aus einem Metall oder einer Metalllegierung gebildet sind. In dem dargestellten Ausführungsbeispiel umfasst eine geschichtete rückstellkraftzeugende Schicht jeweils drei aufeinander angeordnete geschichtete rückstellkraftzeugende Schichten 3. Die einzelnen Schichten 3 in einer solchen geschichteten rückstellkrafterzeugenden Schicht sind dünner als die stellkrafterzeugenden Schichten 2 aus Formgedächtnislegierung, sodass in ihren Randfasern eine geringe Dehnung auftritt als in den stellkrafterzeugenden Schichten 2. Durch eine entsprechend große Anzahl dünner rückstellkraftzeugender Schichten 3, zum Beispiel aus Stahl, kann dennoch die für das Rückstellen des Federelements 1 erforderliche Gegenkraft aufgebracht werden. Ein solches Stellelement 1 kann nicht nur sehr kompakt sein und aufgrund der hohen Kräfte von Formgedächtnislegierungen eine große Stellkraft erzeugen und für Aktoranwendungen bereitstellen, sondern auch eine große maximale elastische Auslenkung erreichen, die durch die Formgedächtnislegierungen gegeben ist.

Entsprechend zu dem in Figur 6 dargestellten Aufbau der geschichteten rückstellkrafterzeugenden Schichten aus mehreren rückstellkrafterzeugenden Schichten 3 können auch alternativ oder zusätzlich geschichtete stellkrafterzeugende Schichten gebildet werden, die jeweils aus einer geschichteten Anordnung zu einem Paket verbundener streifenförmiger stellkrafterzeugender Schichten 2 aus jeweils einer Formgedächtnislegierung gebildet sind.

Die Figur 7 zeigt das Stellelement 1 von Figur 6 mit zusammengefügten Schichten in der Ausgangsstellung, das heißt in der Regel im kalten Zustand bzw. bei einer niedrigen Temperatur. Die Figur 8 zeigt das Stellelement 1 von Figur 7 in der aktivierten Stellung, das heißt in der Regel im warmen Zustand bzw. bei einer hohen Temperatur.

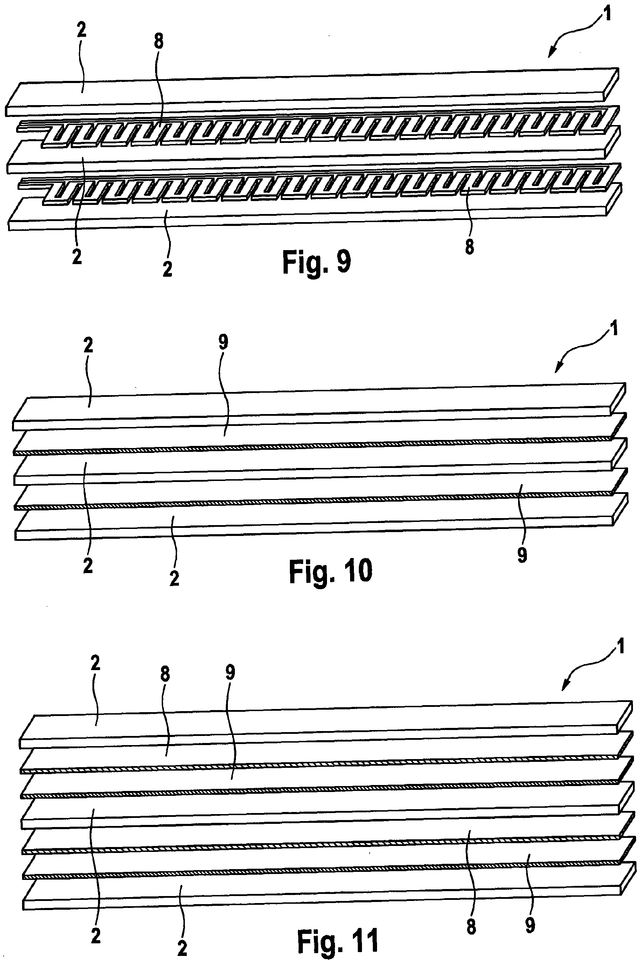

Die Figur 9 zeigt in einer Abwandlung von Figur 1 ein Stellelement 1, bei dem das Paket verbundener streifenförmiger Schichten mit stellkrafterzeugenden Schichten 2 aus einer Formgedächtnislegierung auch wärmeerzeugende Schichten 8 aufweist, die als elektrische Widerstandsheizung ausgebildet sind und die zum Erwärmen oder Betätigen des Stellelements 1 mittels eines durch sie hindurchfließenden Stromes aufheizbar sind. In Figur 9 sind die wärmeerzeugenden Schichten 8 als mäanderförmiger Heizleiter ausgebildet. Mit einer oder mehreren wärmeerzeugenden Schichten 8 kann eine interne, direkte Erwärmung des Stellelements 1 erfolgen. Damit ist die Temperaturänderung in dem Stellelement 1, die zum Erzeugen der Stellkraft führt, schneller oder homogener erzielbar, als sie bei einer externen Erwärmung des Stellelements 1 möglich ist.

In dem Stellelement 1 von Figur 9 sind keine rückstellkrafterzeugenden Schichten eingezeichnet. Sie können zusätzlich, also zwischen stellkrafterzeugenden Schichten 2 und wärmeerzeugenden Schichten 8 angeordnet, das heißt in Figur 9 nicht dargestellt sein. In anderen Ausführungsformen kann aber auch vorgesehen sein, dass die wärmeerzeugenden Schichten 8 gleichzeitig als rückstellkrafterzeugende Schichten ausgebildet sind, das heißt die zwischen benachbarten stellkrafterzeugenden Schichten 2 angeordnete Schicht oder Schichten dient bzw. dienen gleichzeitig zum Erzeugen einer mechanischen Spannung als Rückstellkraft und zum elektrischen Beheizen des Stellelements 1.

Die Figur 10 zeigt in einer Abwandlung von Figur 1 ein Stellelement 1, bei dem das Paket verbundener streifenförmiger Schichten mit stellkrafterzeugenden Schichten 2 aus Formgedächtnislegierung auch wärmeleitende Schichten 9 aus einem massiven, gut wärmeleitenden Material aufweist, die die Wärmeverteilung in dem Stellelement 1 verbessern. In Figur 10 sind die wärmeleitenden Schichten 9 als Wärmeleitfolien ausgebildet. Mit einer oder mehreren wärmeleitenden Schichten 9 kann eine schnellere oder homogenere Erwärmung des Stellelements 1 erreicht werden.

In dem Stellelement 1 von Figur 10 sind keine rückstellkrafterzeugenden Schichten eingezeichnet. Sie können zusätzlich, also zwischen stellkrafterzeugenden Schichten 2 und wärmeleitenden Schichten 9 angeordnet, das heißt in Figur 10 nicht dargestellt sein. In besonders bevorzugten Ausführungsformen kann aber auch vorgesehen sein, dass die wärmeleitenden Schichten 9 gleichzeitig als rückstellkrafterzeugende Schichten ausgebildet sind, das heißt die zwischen benachbarten stellkrafterzeugenden Schichten 2 angeordnete Schicht oder Schichten dient bzw. dienen gleichzeitig zum Erzeugen einer mechanischen Spannung als Rückstellkraft und zur Wärmeleitung.

Die Figur 11 zeigt in einer Abwandlung von Figur 1 ein Stellelement 1, bei dem das Paket verbundener streifenförmiger Schichten mit stellkrafterzeugenden Schichten 2 aus Formgedächtnislegierung sowohl auch wärmeerzeugende Schichten 8 aufweist, die als elektrische Widerstandsheizung ausgebildet sind und die zum Erwärmen oder Betätigen des Stellelements 1 mittels eines durch sie hindurchfließenden Stromes aufheizbar sind, als auch wärmeleitende Schichten 9 aus einem massiven, gut wärmeleitenden Material aufweist, die die Wärmeverteilung in dem Stellelement 1 verbessern. In Figur 11 sind die wärmeerzeugenden Schichten 8 als Heizfolie und die wärmeleitenden Schichten 9 als Wärmeleitfolien ausgebildet.

In dem Stellelement 1 von Figur 11 sind keine rückstellkrafterzeugenden Schichten eingezeichnet. Sie können zusätzlich, also zwischen stellkrafterzeugenden Schichten 2, wärmeerzeugenden Schichten 8 und wärmeleitenden Schichten 9 angeordnet, das heißt in Figur 9 nicht dargestellt sein. In anderen Ausführungsformen kann aber auch vorgesehen sein, dass die wärmeerzeugenden Schichten 8 und/oder die wärmeleitenden Schichten 9 gleichzeitig als rückstellkrafterzeugende Schichten ausgebildet sind, das heißt, die zwischen benachbarten stellkrafterzeugenden Schichten 2 angeordnete Schicht oder Schichten dient bzw. dienen gleichzeitig zum Erzeugen einer mechanischen Spannung als Rückstellkraft und zum elektrischen Beheizen des Stellelements 1 bzw. zur Wärmeleitung.

Wie in dem Ausführungsbeispiel von Figur 11 beispielhaft dargestellt, liegen allgemein in bevorzugten Ausführungsformen benachbarte Schichten gleichen oder unterschiedlichen Typs vollflächig aneinander an oder sind vollflächig miteinander verbunden, beispielsweise stellkrafterzeugende Schichten 2, rückstellkrafterzeugende Schichten 3, wärmeerzeugende Schichten 8 und wärmeleitende Schichten 9.

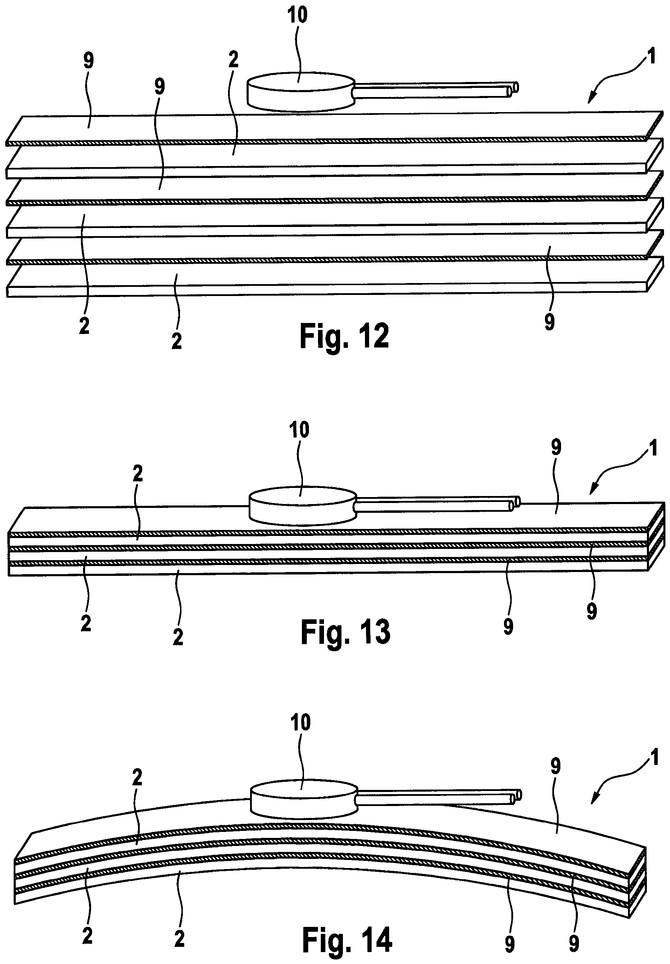

Die Figur 12 zeigt eine Abwandlung des Stellelements 1 von Figur 10 mit äußerer Erwärmung, beispielsweise durch ein externes Heizelement, zum Beispiel einem PTC-Element 10, das auf dem Stellelement 1 angebracht ist. Zur besseren Wärmeverteilung ist zwischen dem Heizelement 10 und dem Stellelement 1 eine wärmeleitende Schicht 9 angeordnet. Aber auch durch Einbringen wärmeleitender Schichten 9 in das Stellelement 1, beispielsweise in Form von Wärmeleitfolien, kann eine Verbesserung der Durchwärmung des Stellelements 1 erreicht werden.

Die Figur zeigt 13 das Stellelement 1 von Figur 12 mit zusammengefügten Schichten in der Ausgangsstellung und die Figur 14 in der aktivierten Stellung.

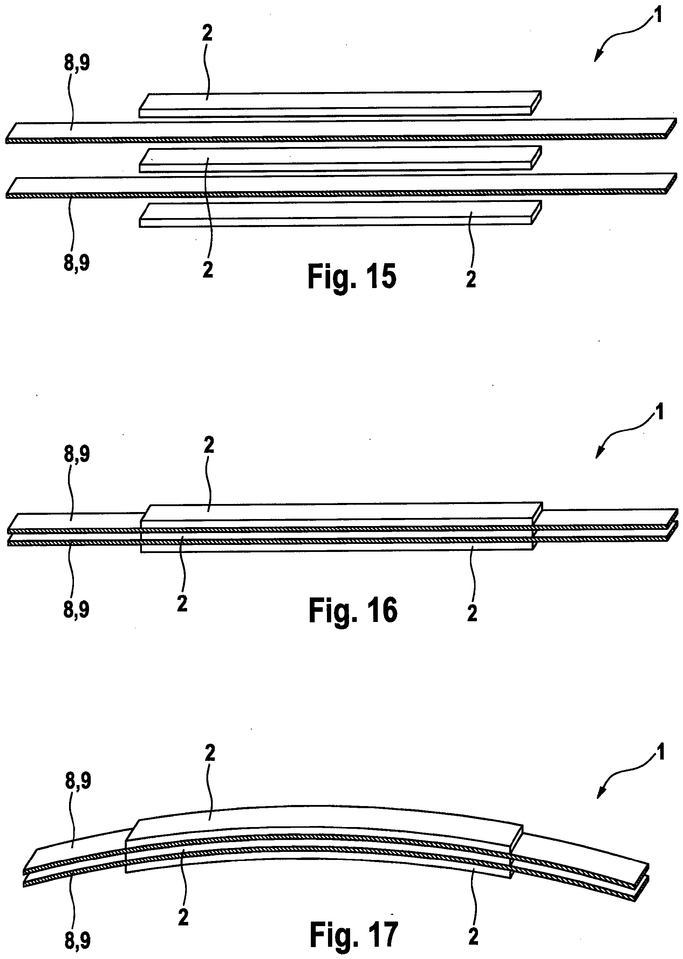

Die Figur 15 zeigt eine Abwandlung des Stellelements 1 von Figur 1 mit in Längsrichtung der geschichteten Anordnung über die stellkrafterzeugenden Schichten 2 aus der Anordnung herausragenden Schichten. Das Stellelement 1 umfasst hierbei mindestens eine wärmeerzeugende Schicht 8 und/oder mindestens eine wärmeleitende Schicht 9, die in Längsrichtung der geschichteten Anordnung über die stellkrafterzeugenden Schichten 2 herausragt. Diese hervorstehende Schicht oder Schichten stehen in Längsrichtung des Streifenpakets ein- oder beidseitig über die stellkrafterzeugenden Schichten 2 hervor. Die Länge des hervorstehenden Abschnitts kann je nach Größe und Bauart des Stellelements 1 zwischen 1 mm und 10 cm betragen. Hervorstehende, in Längsrichtung des Stellelements 1 nach außen überstehende wärmeerzeugende Schichten 8 haben den Vorteil, dass sie besser elektrisch kontaktierbar sind. Entsprechende wärmeleitende Schichten 9 haben den Vorteil, dass sie bei äußerer Erwärmung, durch Umgebungswärme oder durch ein Heizelement, die Wärme besser aufnehmen und in das Stellelement leiten können.

Die Figur zeigt 16 das Stellelement 1 von Figur 15 mit zusammengefügten Schichten in der Ausgangsstellung und die Figur 17 in der aktivierten Stellung.

Bei dem in den Figuren 1 bis 17 dargestellten Ausführungsbeispielen ist das Stellelement 1 in der Ausgangsstellung (vor der Temperaturänderung, d.h. in dem nicht aktivierten, kalten Zustand) gerade und in der aktivierten Stellung (nach der Temperaturänderung, d.h. in dem aktivierten, warmen Zustand) gewölbt bzw. gebogen. Dies ist jedoch nur eine mögliche Ausgestaltung. Die Form des Stellelements 1 ist ohne Beschränkung der Allgemeinheit sowohl in der Ausgangsstellung auch in der aktivierten Stellung beliebig. So kann in anderen möglichen Ausführungsformen beispielsweise das Stellelement 1 in der Ausgangsstellung gewölbt bzw. gebogen und in der aktivierten Stellung gerade, in der Ausgangsstellung gewölbt bzw. gebogen und in der aktivierten Stellung zu der selben Seite mehr gewölbt bzw. gebogen, in der Ausgangsstellung gewölbt bzw. gebogen und in der aktivierten Stellung zu der selben Seite weniger gewölbt bzw. gebogen oder in der Ausgangsstellung zu einer Seite gewölbt bzw. gebogen und in der aktivierten Stellung zu der anderen Seite gewölbt bzw. gebogen sein.

### Bezugszeichenliste

- 1: Stellelement
- 2: stellkrafterzeugende Schicht
- 3: rückstellkrafterzeugende Schicht
- 4: Verbindungselement
- 5: Spannbügel
- 6: Gegenplatte
- 7: Mutter
- 8: wärmeerzeugende Schicht
- 9: wärmeleitende Schicht
- 10: PTC-Element

## Patentansprüche

1. Thermisches Stellelement (1), das aus einer Ausgangsstellung bei einer Temperaturänderung, die zum Überschreiten oder Unterschreiten einer Schalttemperatur führt, beim Erreichen der Schalttemperatur eine Verbiegung oder elastische Auslenkung in eine aktivierte Stellung durchführt, wobei die Verbiegung oder Auslenkung eine Stellkraft erzeugt, die als thermosensitive Aktorik nutzbar ist, und bei einem Rückgang der Temperaturänderung, die zum Unterschreiten bzw. Überschreiten der Schalttemperatur führt, aus der aktivierten Stellung in die Ausgangsstellung zurückkehrt, mit einer geschichteten Anordnung zu einem Paket verbundener streifenförmiger Schichten, wobei mindestens eine der Schichten eine stellkrafterzeugende Schicht (2) ist, die bei der Temperaturänderung die Stellkraft des Stellelements (1) erzeugt, und die stellkrafterzeugende Schicht (2) aus einer Formgedächtnislegierung gebildet ist,
**dadurch gekennzeichnet, dass**
das Paket mehrere stellkrafterzeugende Schichten (2) aufweist, die jeweils aus einer Formgedächtnislegierung gebildet sind, wobei die Formgedächtnislegierungen der stellkrafterzeugenden Schichten (2) dieselben sind oder dieselbe Schalttemperatur aufweisen, und zwischen mindestens zwei benachbarten stellkrafterzeugenden Schichten (2) eine rückstellkrafterzeugende Schicht (3) angeordnet ist, die aus einem Metall oder einer Metalllegierung gebildet ist und die bei der Verbiegung oder Auslenkung des Stellelements (1) eine mechanische Rückstellkraft erzeugt, die als Gegenkraft zu der Stellkraft wirkt und bei einem Rückgang der Temperaturänderung die Rückstellung des Stellelements (1) in die Ausgangsstellung bewirkt.

2. Stellelement (1) nach einem der vorhergehenden Ansprüche, **dadurch gekennzeichnet, dass** es mindestens eine geschichtete rückstellkrafterzeugende Schicht (3) aufweist, die aus einer geschichteten Anordnung zu einem Paket verbundener streifenförmiger Schichten aus einem Metall oder einer Metalllegierung gebildet ist.

3. Stellelement (1) nach Anspruch 2, **dadurch gekennzeichnet, dass** die geschichtete rückstellkrafterzeugende Schicht (3) aus zwei, drei, vier, fünf oder sechs Schichten gebildet ist.

4. Stellelement (1) nach Anspruch 2 oder 3, **dadurch gekennzeichnet, dass** es zwei, drei, vier, fünf, sechs oder sieben geschichtete rückstellkrafterzeugende Schichten (3) aus einem Metall oder einer Metalllegierung aufweist.

5. Stellelement (1) nach einem der vorhergehenden Ansprüche, **dadurch gekennzeichnet, dass** die rückstellkrafterzeugende Schicht (3) aus einem Federwerkstoff, Stahl oder Edelstahl gebildet ist.

6. Stellelement (1) nach einem der vorhergehenden Ansprüche, **dadurch gekennzeichnet, dass** es mindestens eine geschichtete stellkrafterzeugende Schicht (2) aufweist, die aus einer geschichteten Anordnung zu einem Paket verbundener streifenförmiger stellkrafterzeugender Schichten aus jeweils einer Formgedächtnislegierung gebildet sind.

7. Stellelement (1) nach Anspruch 6, **dadurch gekennzeichnet, dass** die geschichtete stellkrafterzeugende Schicht (2) aus zwei, drei, vier, fünf oder sechs Schichten gebildet ist.

8. Stellelement (1) nach Anspruch 6 oder 7, **dadurch gekennzeichnet, dass** es zwei, drei, vier, fünf, sechs oder sieben geschichtete stellkrafterzeugende Schichten (2) aufweist, die jeweils aus einer Formgedächtnislegierung gebildet sind.

9. Stellelement (1) nach einem der vorhergehenden Ansprüche, **dadurch gekennzeichnet, dass** das Paket verbundener streifenförmiger Schichten mindestens eine wärmeerzeugende Schicht (8) aufweist, die als elektrische Widerstandsheizung ausgebildet ist und die zum Erwärmen oder Betätigen des Stellelements (1) mittels eines durch sie hindurchfließenden Stromes aufheizbar ist.

10. Stellelement (1) nach dem vorhergehenden Anspruch, **dadurch gekennzeichnet, dass** mindestens eine rückstellkrafterzeugende Schicht (3) gleichzeitig als wärmeerzeugende Schicht (8) ausgebildet ist.

11. Stellelement (1) nach einem der vorhergehenden Ansprüche, **dadurch gekennzeichnet, dass** das Paket verbundener streifenförmiger Schichten mindestens eine wärmeleitende Schicht (9) aus einem massiven, gut wärmeleitenden Material aufweist.

12. Stellelement (1) nach dem vorhergehenden Anspruch, **dadurch gekennzeichnet, dass** mindestens eine rückstellkrafterzeugende Schicht (3) gleichzeitig als wärmeleitende Schicht (9) ausgebildet ist.

13. Stellelement (1) nach den Ansprüchen 10 und 12, **dadurch gekennzeichnet, dass** mindestens eine rückstellkrafterzeugende Schicht (3) gleichzeitig sowohl als wärmeerzeugende Schicht (8) als auch als wärmeleitende Schicht (9) ausgebildet ist.

14. Stellelement (1) nach Anspruch 9 oder 11, **dadurch gekennzeichnet, dass** mindestens eine wärmeerzeugende und/oder mindestens eine wärmeleitende Schicht (9) in Längsrichtung der geschichteten Anordnung über die stellkrafterzeugenden Schichten (2) herausragt.

15. Stellelement (1) nach einem der vorhergehenden Ansprüche, **dadurch gekennzeichnet, dass** die Formgedächtnislegierungen der stellkrafterzeugenden Schichten (2) Formgedächtnislegierungen mit Einweg-Effekt sind.

16. Stellelement (1) nach einem der vorhergehenden Ansprüche, **dadurch gekennzeichnet, dass** es zwei, drei, vier, fünf, sechs oder sieben stellkrafterzeugende Schichten (2) aus einer Formgedächtnislegierung aufweist.

17. Stellelement (1) nach einem der vorhergehenden Ansprüche, **dadurch gekennzeichnet, dass** es in Form einer geschichteten streifenförmigen Blattfeder ausgebildet ist.

18. Stellelement (1) nach einem der vorhergehenden Ansprüche, **dadurch gekennzeichnet, dass** die geschichtete Anordnung zu einem Paket verbundener streifenförmiger Schichten (2, 3) ein Verbindungselement (4) zum kraft- und/oder formschlüssigen Zusammenhalten der Schichten (2, 3) aufweist, vorzugsweise ein etwa in der Mitte des Stellelements (1) angeordnetes Verbindungselement (4).

## Claims

1. A thermal actuating element (1), which from an initial position in the case of a temperature change, which leads to the exceeding or deceeding of a switching temperature, performs a bending or elastic deflection into an activated position when reaching the switching temperature, wherein the bending or deflection generates an actuating force, which can be used as a thermo-sensitive actuator, and in the case of a reduction in the temperature change, which leads to the deceeding or exceeding of the switching temperature, returns to the initial position from the activated position, with a layered arrangement of a packet of connected lamellar layers, wherein at least one of the layers is an actuating force-generating layer (2), which generates the actuating force of the actuating element (1) in the case of a temperature change, and the actuating force-generating layer (2) is formed from a shape memory alloy,
**characterized in that**
the packet comprises multiple actuating force-generating layers (2), which are each formed from shape memory alloy, wherein the shape memory alloys of the actuating force-generating layers (2) are the same or have the same switching temperature, and a restoring force-generating layer (3) is arranged between at least two adjacent actuating force-generating layers (2), which is formed from a metal or metal alloy and which generates a mechanical restoring force during the bending or deflection of the actuating element (1), which acts as a counteracting force to the actuating force and effects the return of the actuating element (1) into the initial position upon a reduction in the temperature change.

2. The actuating element (1) according to any of the preceding claims, **characterized in that** it comprises at least one layered restoring force-generating layer (3), which is formed by a layered arrangement of a packet of connected lamellar layers of a metal or a metal alloy.

3. The actuating element (1) according to claim 2, **characterized in that** the layered restoring force-generating layer (3) is formed from two, three, four, five or six layers.

4. The actuating element (1) according to claim 2 or 3, **characterized in that** it comprises two, three, four, five, six or seven layered restoring force-generating layers (3) from a metal or a metal alloy.

5. The actuating element (1) according to any of the preceding claims, **characterized in that** the restoring force-generating layer (3) is formed from a spring material, steel or stainless steel.

6. The actuating element (1) according to any of the preceding claims, **characterized in that** it comprises at least one layered actuating force-generating layer (2), which is formed from a layered arrangement of a packet of connected lamellar actuating force-generating layers in each case formed from a shape memory alloy.

7. The actuating element (1) according to claim 6, **characterized in that** the layered actuating force-generating layer (2) is formed from two, three, four, five or six layers.

8. The actuating element (1) according to claims 6 or 7, **characterized in that** it comprises two, three, four, five, six or seven layered actuating force-generating layers (2), which are each formed from a shape memory alloy.

9. The actuating element (1) according to any of the preceding claims, **characterized in that** the packet of connected lamellar layers comprises at least one heat-generating layer (8), which is formed as an electrical resistance heater and which is heatable by means of a current flowing through it for heating or actuating the actuating element (1).

10. The actuating element (1) according to the preceding claim, **characterized in that** at least one restoring force-generating layer (3) is formed concurrently as a heat-generating layer (8).

11. The actuating element (1) according to any of the preceding claims, **characterized in that** the packet of connected lamellar layers comprises at least one heat-conducting layer (9) from a solid, well heat-conducting material.

12. The actuating element (1) according to the preceding claim, **characterized in that** at least one restoring force-generating layer (3) is formed concurrently as a heat-conducting layer (9).

13. The actuating element (1) according to claims 10 and 12, **characterized in that** at least one restoring force-generating layer (3) is formed concurrently both as a heat-generating layer (8) and as a heat-conducting layer (9).

14. The actuating element (1) according to claim 9 or 11, **characterized in that** at least one heat-generating and/or at least one heat-conducting layer (9) protrudes from the actuating force-generating layers (2) in a longitudinal direction of the layered arrangement.

15. The actuating element (1) according to any of the preceding claims, **characterized in that** the shape memory alloys of the actuating force-generating layers (2) are one-way effect shape memory alloys.

16. The actuating element (1) according to any of the preceding claims, **characterized in that** it comprises two, three, four, five, six or seven actuating force-generating layers (2) from a shape memory alloy.

17. The actuating element (1) according to any of the preceding claims, **characterized in that** it is designed in the form of a layered lamellar leaf spring.

18. The actuating element (1) according to any of the preceding claims, **characterized in that** the layered arrangement of a packet of connected lamellar layers (2, 3) comprises a connection element (4) for holding the layers (2, 3) together in a positive and/or non-positive manner, preferably a connection element (4) arranged approximately in the middle of the actuating element (1).

## Revendications

1. Elément de réglage thermique (1) effectuant à partir d'une position initiale, lors d'une variation de température conduisant au dépassement positif ou au dépassement négatif d'une température de commutation, une flexion ou une excursion élastique jusqu'à une position activée lorsque ladite température de commutation est atteinte, ladite flexion ou excursion engendrant une force de réglage dont il peut être tiré parti en tant que moyen d'actionnement thermosensible, ledit élément retournant à ladite position initiale, à partir de ladite position activée, lors d'une rétrogression de ladite variation de température gouvernant, respectivement, le dépassement négatif ou le dépassement positif de ladite température de commutation, et étant muni d'un ensemble stratifié en un regroupement de couches solidarisées configurées en des bandes, au moins l'une desdites couches étant une couche (2) génératrice d'une force de réglage, qui engendre la force de réglage dudit élément de réglage (1) lors de la variation de température, et ladite couche (2) génératrice de la force de réglage étant constituée d'un alliage à mémoire de forme,
**caractérisé par le fait que**
le regroupement compte plusieurs couches (2) génératrices de la force de réglage constituées, à chaque fois, d'un alliage à mémoire de forme, sachant que les alliages à mémoire de forme desdites couches (2) génératrices de la force de réglage sont identiques ou présentent la même température de commutation, et qu'une couche (3) génératrice d'une force de rappel, interposée entre au moins deux couches voisines (2) génératrices de la force de réglage, est constituée d'un métal ou d'un alliage métallique et engendre, au cours de la flexion ou de l'excursion de l'élément de réglage (1), une force mécanique de rappel agissant comme une force s'opposant à la force de réglage et provoquant, lors d'une rétrogression de la variation de température, le rappel dudit élément de réglage (1) à la position initiale.

2. Elément de réglage (1) selon l'une des revendications précédentes, **caractérisé par le fait qu'**il comporte au moins une couche lamellaire (3) génératrice d'une force de rappel, constituée d'un ensemble stratifié en un regroupement de couches solidarisées configurées en des bandes, en un métal ou en un alliage métallique.

3. Elément de réglage (1) selon la revendication 2, **caractérisé par le fait que** la couche lamellaire (3) génératrice de la force de rappel est composée de deux, trois, quatre, cinq ou six couches.

4. Elément de réglage (1) selon la revendication 2 ou 3, **caractérisé par le fait qu'**il comprend deux, trois, quatre, cinq, six ou sept couches lamellaires (3) en un métal ou en un alliage métallique, génératrices de la force de rappel.

5. Elément de réglage (1) selon l'une des revendications précédentes, **caractérisé par le fait que** la couche (3) génératrice de la force de rappel est constituée d'un matériau à ressorts, d'un acier ou d'un acier inoxydable.

6. Elément de réglage (1) selon l'une des revendications précédentes, **caractérisé par le fait qu'**il comporte au moins une couche lamellaire (2) génératrice d'une force de réglage, constituée d'un ensemble stratifié en un regroupement de couches solidarisées génératrices de la force de réglage, configurées en des bandes et consistant, à chaque fois, en un alliage à mémoire de forme.

7. Elément de réglage (1) selon la revendication 6, **caractérisé par le fait que** la couche lamellaire (2) génératrice de la force de réglage est composée de deux, trois, quatre, cinq ou six couches.

8. Elément de réglage (1) selon la revendication 6 ou 7, **caractérisé par le fait qu'**il comprend deux, trois, quatre, cinq, six ou sept couches lamellaires (2) génératrices de la force de réglage et constituées, à chaque fois, d'un alliage à mémoire de forme.

9. Elément de réglage (1) selon l'une des revendications précédentes, **caractérisé par le fait que** le regroupement de couches solidarisées, configurées en des bandes, comporte au moins une couche (8) génératrice de chaleur réalisée en tant que chauffage électrique résistif et pouvant être chauffée, au moyen d'un courant qui la parcourt, en vue du réchauffage ou de l'actionnement dudit élément de réglage (1).

10. Elément de réglage (1) selon la revendication précédente, **caractérisé par le fait qu'**au moins une couche (3), génératrice de la force de rappel, est simultanément réalisée en tant que couche (8) génératrice de chaleur.

11. Elément de réglage (1) selon l'une des revendications précédentes, **caractérisé par le fait que** le regroupement de couches solidarisées, configurées en des bandes, comporte au moins une couche (9) thermiquement conductrice, en un matériau massif à bonne conductivité thermique.

12. Elément de réglage (1) selon la revendication précédente, **caractérisé par le fait qu'**au moins une couche (3), génératrice de la force de rappel, est simultanément réalisée en tant que couche (9) thermiquement conductrice.

13. Elément de réglage (1) selon les revendications 10 et 12, **caractérisé par le fait qu'**au moins une couche (3) génératrice de la force de rappel est réalisée, simultanément, à la fois en tant que couche (8) génératrice de chaleur et que couche (9) thermiquement conductrice.

14. Elément de réglage (1) selon la revendication 9 ou 11, **caractérisé par le fait qu'**au moins une couche génératrice de chaleur, et/ou au moins une couche (9) thermiquement conductrice, dépasse(nt) au-delà des couches (2) génératrices de la force de réglage dans la direction longitudinale de l'ensemble stratifié.

15. Elément de réglage (1) selon l'une des revendications précédentes, **caractérisé par le fait que** les alliages à mémoire de forme des couches (2) génératrices de la force de réglage sont des alliages à mémoire de forme à effet unidirectionnel.

16. Elément de réglage (1) selon l'une des revendications précédentes, **caractérisé par le fait qu'**il comprend deux, trois, quatre, cinq, six ou sept couches (2) en un alliage à mémoire de forme, génératrices de la force de réglage.

17. Elément de réglage (1) selon l'une des revendications précédentes, **caractérisé par le fait qu'**il est réalisé sous la forme d'une lame de ressort lamellaire, configurée en une bande.

18. Elément de réglage (1) selon l'une des revendications précédentes, **caractérisé par le fait que** l'ensemble stratifié en un regroupement de couches (2, 3) solidarisées, configurées en des bandes, comporte un élément de liaison (4) conçu pour assurer la cohésion mutuelle desdites couches (2, 3) par engagement positif et/ou par complémentarité de formes, de préférence un élément de liaison (4) placé sensiblement au centre dudit élément de réglage (1).
